# EUROPEAN PATENT APPLICATION

(11) **EP 1 914 129 A2**
(43) Date of publication of application: **23.04.2008**
(21) Application number: 07118910.4
(22) Date of filing: 19.10.2007
(51) Int. Cl.: B60R 25/10, G08B 13/187

(54) **Intrusion detecting system**

(30) Priority: 19.10.2006 JP 2006284519
(71) Applicant: Toyota Jidosya Kabushikikaisya, Toyota-shi, Aichi 471-8571 (JP)
(72) Inventor: Okada, Hiroki, Toyota-shi, Aichi-ken 471-8571 (JP)
(74) Representative: Intes, Didier Gérard André

(57) **Abstract**

An intrusion detecting system (9) has a transmitter (12) transmitting radio waves in an LF band; a detector (14) detecting an electric field intensity at least in one axis and receiving the radio waves from the transmitter; and an intrusion detecting part (10) configured to detect an intrusion within a predetermined range based on a comparison result between a predetermined threshold and a value detected by the detector for electric field intensities of any axis.

## Description

### BACKGROUND OF THE INVENTION

### 1. Field of the Invention

The present invention relates to an intrusion system, and, in particular, to an intrusion system having a transmitter transmitting radio waves, and a detector receiving the radio waves from the transmitter, and detecting an intrusion in a predetermined range based on a detection result of the detector.

### 2. Description of the Related Art

In the related art, an intrusion detecting system which detects an intrusion of a person to the inside of a vehicle is known (for example, see Japanese Laid-Open Patent Application 6-144159). This intrusion detecting system has a transmitter transmitting supersonic waves to the inside of a vehicle, and a receiver receiving the supersonic waves detects an intrusion of a person from turbulence of sound waves with the use of Doppler effect of reflective supersonic waves responding to a movement of an intruder.

Supersonic waves are blocked in some degree by a window glass of a vehicle or such due to behavior of sound. However, they are not completely blocked, and relatively likely to leak to the outside of the vehicle. When such a leak of transmitted supersonic waves occurs to the outside of the vehicle, a passerby near a side surface of the vehicle may be erroneously determined as an intruder to the inside of the vehicle, whereby intrusion detection may be made erroneously. In order to solve the problem, an output level of the transmission of supersonic waves may be so reduced as to avoid such a leak of supersonic waves to the outside of the vehicle. However, in this case, a dead zone in which supersonic waves are not applied may occur inside of the vehicle, and thus, a movement of a person who has intruded to the inside of vehicle may not be caught, whereby intrusion detection may be failed in. Further, in the above-mentioned system of detecting an intrusion to the inside of the vehicle with the use of supersonic waves, the receiver may receive sound (disturbances) occurring outside of the vehicle, whereby erroneous intrusion detection may occur.

On the other hand, another system may be considered in which microwaves are used instead of supersonic waves to detect an intrusion to the inside of a vehicle. However, since microwaves are such radio waves as having high progressive property, and thus, such a problem may occur that an area in which intrusion detection is not possible may increase in this system. Further, when a body such as a metal body which is likely to reflect microwaves is placed, the microwaves may leak to the outside of the vehicle, whereby erroneous intrusion detection may occur, also in this system.

### SUMMARY OF THE INVENTION

The present invention has been devised in consideration of the above-described points, and an object of the present invention is to provide an intrusion detecting system by which leakage of radio waves from the inside to the outside of a vehicle can be controlled, and thus, erroneous detection of an intrusion to the inside of the vehicle can be controlled.

The above-mentioned object of the present invention is achievable by an intrusion detecting system having a transmitter transmitting radio waves in an LF band; a detector detecting an electric field intensity at least in one axis and receiving the radio waves from the transmitter; and an intrusion detecting part configured to detect an intrusion within a predetermined range based on a comparison result between a predetermined threshold and a value detected by the detector for electric field intensities of any axis.

In this configuration, radio waves in an LF band spread in a manner of an approximately spherical shape, and attenuates as a distance increases. Further, when a metal body exists, the radio waves are relatively likely to be blocked thereby, and thus, leakage to the outside of the metal body is not likely to occur. Accordingly, in the present invention, it is possible to effectively reduce leakage of the radio waves from a predetermined range which is surrounded by the metal body. It is noted that when electric field intensity changes in any axis, it is possible to determine an intrusion has occurred. Accordingly, according to the present invention, it is possible to effectively reduce leakage of radio waves from the predetermined range surrounded by the metal body, and it is possible to avoid erroneous detection of an intrusion.

Thus, in the present invention, it is possible to effectively reduce leakage of radio waves from a predetermined range, and it is possible to avoid erroneous detection of an intrusion.

### BRIEF DESCRIPTION OF THE DRAWINGS

Other objects and further features of the present invention will become more apparent from the following detailed description when read in conjunction with the accompanying drawings:
FIG. 1 shows a configuration of an intrusion detecting system in one embodiment of the present invention;
FIG. 2 shows an arrangement of transmitters and detectors included in the intrusion detecting system in the embodiment of the present invention;
FIG. 3 shows a distribution of an electric field of radio waves output from the transmitters of the intrusion detecting system in the embodiment of the present invention;
FIG. 4 typically shows a configuration of the detector of the intrusion detecting system in the embodiment of the present invention;
FIG. 5 illustrates changes in electric field intensities occurring upon an intrusion to the inside of a vehicle, in the intrusion detecting system in the embodiment of the present invention;
FIG. 6 shows a flow chart of one example of a control routine executed by the intrusion detecting system in the embodiment of the present invention;
FIG. 7 illustrates signal coding and decoding processing in the transmitter and the detector;
FIG. 8 shows a time chart in one example for a case where the system operates and a case where the system does not operate;
FIG. 9 shows a relationship between the case where the system operates or the case where the system does not operate, and existence/absence of a change in an electric field; and
FIG. 10 shows ranges in which a request signal for requesting a portable apparatus which exists outside of a vehicle from an in-vehicle apparatus.

### DETAILED DESCRIPTION OF THE PREFERRED EMBODIMENTS

According to an embodiment of the present invention, an intrusion detecting system has a transmitter transmitting radio waves in an LF band; a detector detecting an electric field intensity at least in one axis and receiving the radio waves from the transmitter; and an intrusion detecting part configured to detect an intrusion within a predetermined range based on a comparison result between a predetermined threshold and a value detected by the detector far electric field intensities of any axis.

In this configuration, radio waves in the LF band spread in a manner of an approximately spherical shape, and attenuates as a distance increases. Further, when a metal body exists, the radio waves are relatively likely to be blocked thereby, and thus, leakage to the outside of the metal body is not likely to occur. Accordingly, in the embodiment of the present invention, it is possible to effectively reduce leakage of the radio waves from a predetermined range which is surrounded by the metal body. It is noted that when electric field intensity changes in any axis, it is possible to determine an intrusion has occurred. Accordingly, according to the present invention, it is possible to effectively reduce leakage of radio waves from the predetermined range surrounded by the metal body, and it is possible to avoid erroneous detection of an intrusion.

Thus, in the present invention, it is possible to effectively reduce leakage of radio waves from a predetermined range, and it is possible to avoid erroneous detection of an intrusion.

In the above-mentioned intrusion detecting system, the threshold may be an electric field intensity which is detected by the detector immediately after a start of precaution setting to detect an intrusion by means of the intrusion detecting part; and the intrusion detecting part may detect an intrusion in the predetermined range based on the comparison result, after the electric field intensity detected by the detector of each axis has been stored as the threshold immediately after the precaution setting. As a result, it is possible to carry out intrusion detection based on a change in an electric field intensity based on a situation immediately after the start of precaution setting.

Further, in the intrusion detecting system, the transmitter may be provided near a center in a vehicle width direction inside the vehicle; and the detector may be provided inside of an interior finishing material inside of the vehicle.

Further, in the intrusion detecting system, the transmitter may transmit radio waves in the LF band after coding; the detector may decode the received radio waves; and the intrusion detecting part may detect instruction in the predetermined range based on the comparison result in a case where a code obtained from decoding made by the detector agrees with a predetermined code. It is possible to positively distinguish radio waves which are from the transmitter, from noise, and thus, it is possible to improve preciseness of intrusion detection.

In this case, a method of coding of the radio waves, made by the transmitter, may be an ASK method.

Further, in the above-mentioned intrusion detecting system, an in-vehicle transmitter, which is of a remote control system used for controlling an in-vehicle apparatus, may be also used as the transmitter in a shared manner, based on a collation result in communications with a portable apparatus which an occupant carries. As a result, it is possible to share the component in the entire in-vehicle system, and thus, it is possible to reduce the number of components, and simplify the configuration.

Further, the above-mentioned intrusion detecting system may have an approach detecting part configured to detect approach of a body to the vehicle; and a transmission mode switching part configured to switch a mode for transmitting the radio waves in the LF band by the transmitter, between a regular mode and a power saving mode based on a detection result of said approach detecting part. Thereby, it is possible to reduce power consumption in system operation.

In this case, the approach detecting part may have an electric field intensity detecting part configured to detect an electric field intensity of radio waves of a request signal, which is used for requesting a portable apparatus to transmit of a predetermined signal, which request signal is transmitted by an in-vehicle communication apparatus of a remote control system, which remote control system is provided for controlling an in-vehicle apparatus based on a collation result in communications with the portable apparatus which an occupant who is getting in the vehicle from the outside thereof carries; and detects the body approaching the vehicle from the outside of the vehicle.

Below, with reference to figures, an embodiment of the present invention will be described in more detail.

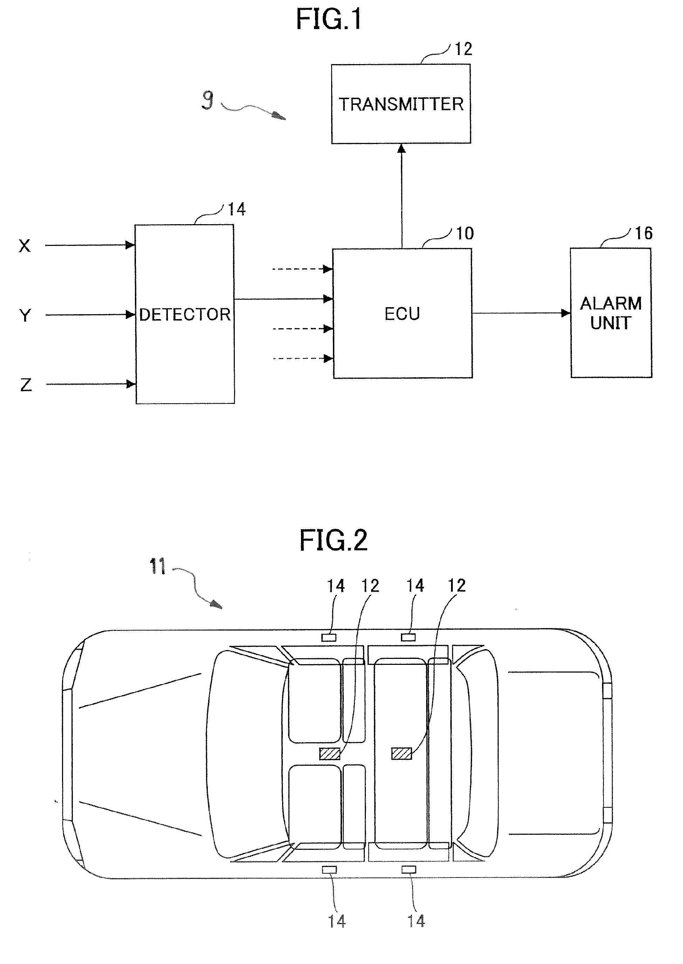

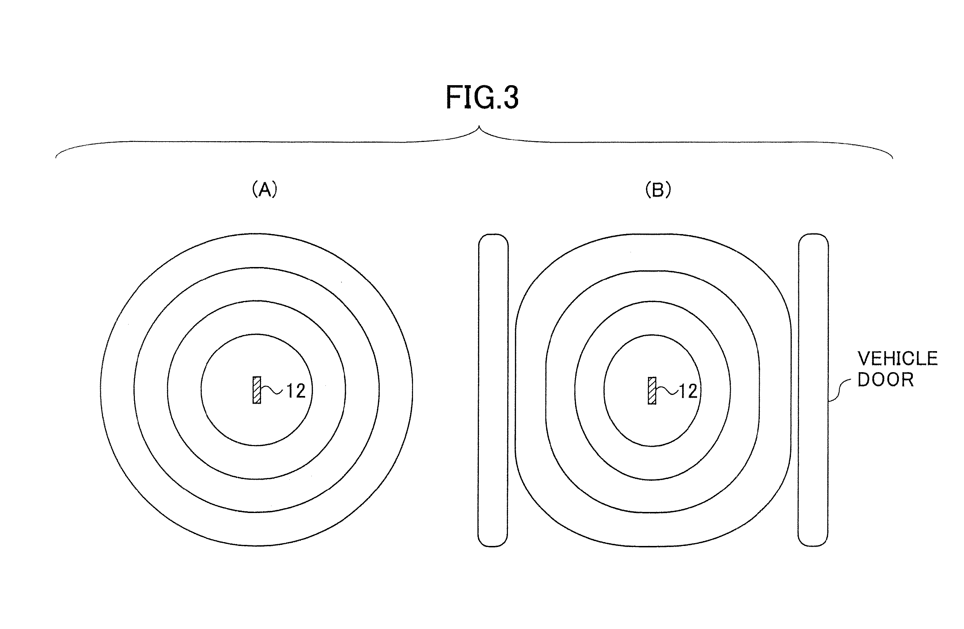

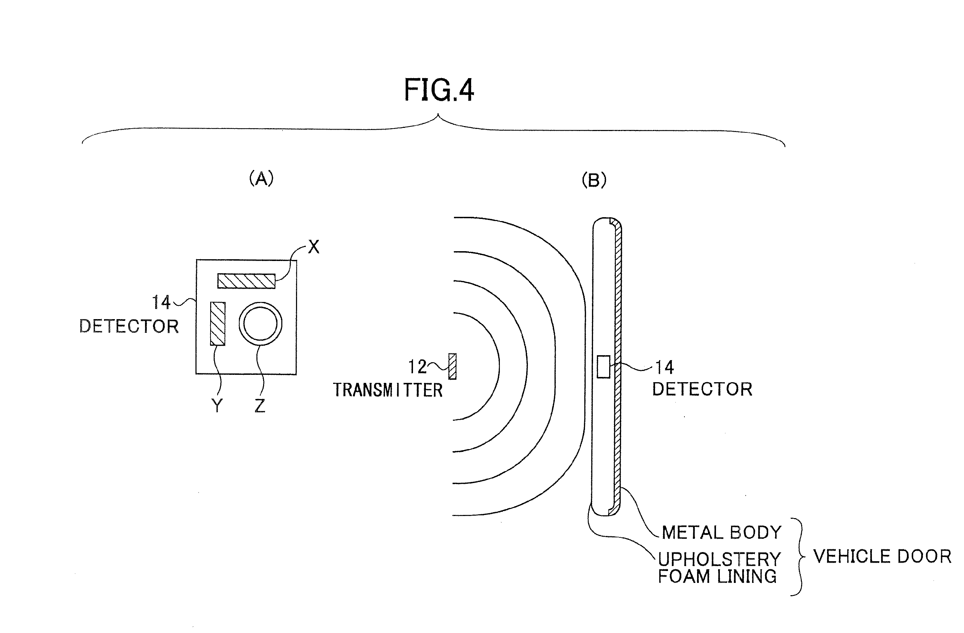

FIG. 1 shows a configuration of an intrusion detecting system 9 in one embodiment of the present invention. FIG. 2 shows an arrangement of transmitters and detectors included in the intrusion detecting system. FIG. 3 shows a distribution of an electric field of radio waves output by the transmitters of the intrusion detecting system. FIG. 4 typically shows a configuration of the detector of the intrusion detecting system. FIG. 3 and FIG. 4 (B) show views of the distribution of an electric field inside of a vehicle taken from the top of the vehicle.

The intrusion detecting system 9 in the embodiment of the present invention is mounted in a vehicle 11, and is a system for detecting an intruder who intrudes into the inside of the vehicle from the outside. As shown in FIG. 1, the intrusion detecting system 9 in the embodiment of the present invention includes an electronic control unit (abbreviated by an ECU, hereinafter) 10 configured mainly by a microcomputer. The ECU 10 includes a CPU, a ROM, a RAM, an input/output interface, and so forth. To the ECU 10, transmitters 12 and detectors 14 are connected.

The transmitters 12 are disposed near the center in a vehicle width direction inside of the vehicle (for example, two transmitters 12 are disposed in the center of a front seat and a rear seat respectively, as shown in FIG. 2). Each transmitter 12 has a transmission antenna extending in at least one axis of the vehicle width direction (X-axis direction), a vehicle front-to-rear direction (Y-axis direction) and a vertical direction (Z-axis direction), as well as an oscillating part and an amplifying part for providing power to the transmission antenna. The transmitters 12 output radio waves of an LF band (for example, 125 kHz or 134 kHz) from the transmission antennas according to instructions from the ECU 10.

When radio waves are thus output from the transmitters 12, a distribution of an electric field of the radio waves spreads in a spherical manner as shown in FIG. 3 (A) from the transmission antennas of the transmitters 12 which act as transmission sources, and attenuates as distances increase. Further, inside of the vehicle surrounded by a frame of vehicle doors including metal bodies, the thus-output radio waves in the LF band are blocked by the metal body without transmitting therethrough (actually, reflection or diffraction occurs). As a result, the actual distribution of the electric field is such as that shown in FIG. 3 (B) in which leakage to the outside of the vehicle is controlled.

Each detector 14 is disposed between the metal body and an upholstery foam lining provided inside of the vehicle for each of the openable and closable vehicle doors (FIG. 4 (B)). The detector 14 has a reception antenna extending in at least one axis (in the embodiment, in each of the three axes) of the vehicle width direction (X-axis direction), the vehicle front-to-rear direction (Y-axis direction) and the vertical direction (Z-axis direction), as shown in FIG. 4 (A). Each detector 14 receives the radio waves from the transmitters 14 by detecting an electric field intensity received by the reception antenna for each axis. The received signal received by the detector 14 is provided to the ECU 10. The ECU 10 determines whether or not an intruder intrudes into the inside of the vehicle from the outside, based on the received signal provided by the detector 14, as will be described later.

The ECU 10 is connected to an alarm unit 16 provided in the vehicle. The alarm unit 16 is an apparatus for blowing a buzzer, displaying on a display device, and, intimidates an intruder who intrudes into the inside of the vehicle or calls attention of a person around the vehicle, by blowing the buzzer or displaying on the display device, according to instructions from the ECU 10.

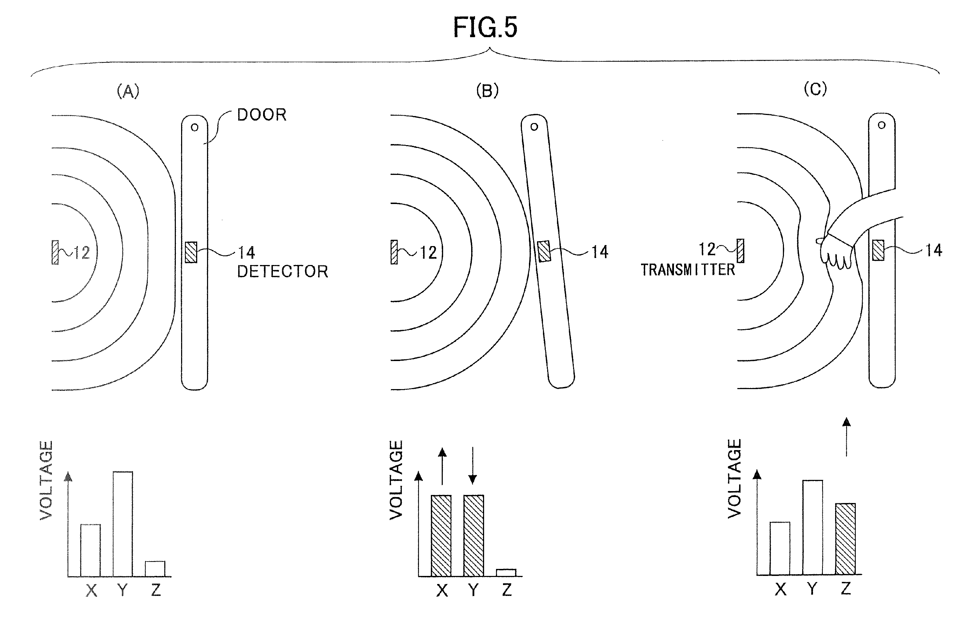

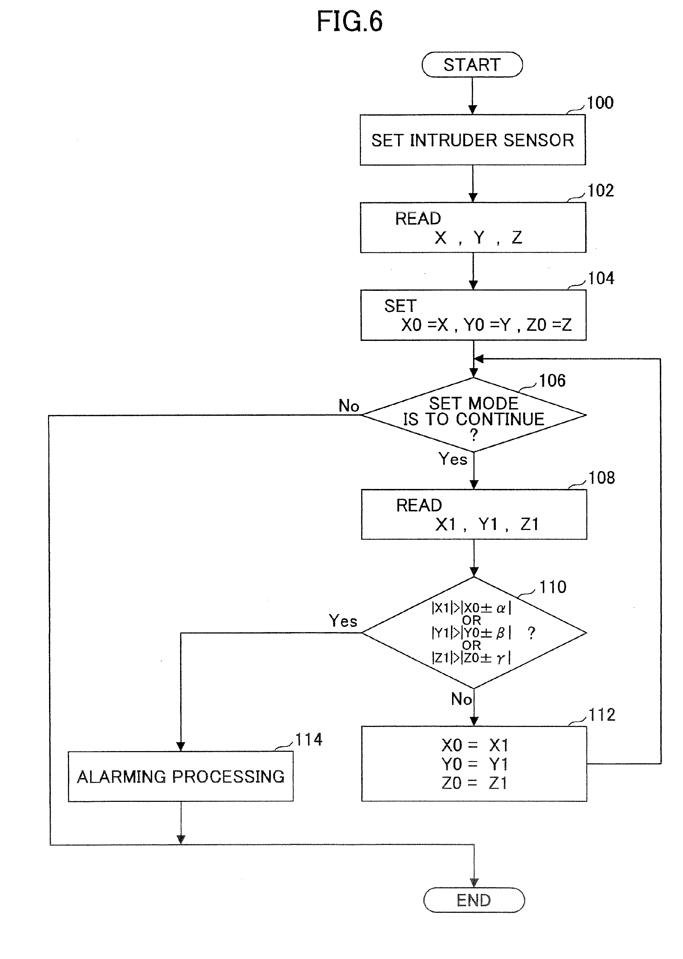

Next, operation of the intrusion detecting system in the embodiment will be described. FIG. 5 illustrates a change in an electric field intensity occurring when an intrusion into the inside of the vehicle occurs, in the intrusion detecting system in the embodiment. It is noted that FIG. 5 shows a view of a distribution of an electric field inside of the vehicle taken from the top of the vehicle. FIG. 6 shows a flow chart of one example of a control routine carried out by the intrusion detecting system in the embodiment.

In the embodiment, when the vehicle doors are closed and locked by an occupant in a state in which the vehicle stops, the intrusion detecting system is set in a precaution state in which intrusion detection is made (Step 10). When this setting (referred to as 'precaution setting'), after that, the ECU 10 provides the transmitters 12 of such instructions as to output radio waves in the LF band, at all times or only for a predetermined continuation time (for example, 10 milliseconds) at predetermined intervals (for example, every 100 milliseconds). When the instructions are provided, the transmitters 12 output radio waves in the LF band from the transmission antennas.

In a condition in which the radio waves in the LF band are output from the transmitters 12, when no intrusion into the inside of the vehicle occurs, and also, neither opening nor closing operation of the vehicle doors is made, the distribution of the electric field provided by the radio waves inside of the vehicle does not much change in any axis, and is maintained in a certain value in each axis (FIG. 5 (A)). It is noted that, inside of the vehicle, structures such as seats, a steering wheel and so forth exit, and also, a baggage or such may be placed on the seat. However, in such a case, the radio waves in the LF band output from the transmitters 12 are likely to go around behind a structure or a baggage, and thus, the distribution of the electric field inside of the vehicle are merely affected by the structure or the baggage. Thus, the radio waves are not blocked at all before they reach the detectors 14, and there hardly occurs a case where the radio waves do not reach the detectors 14.

On one hand, when an intrusion into the inside of the vehicle occurs as a result of the vehicle door being prized open, the distribution of the electric field provided by the radio waves changes in the vehicle width direction (X-axis direction) and the vehicle front-to-rear direction (Y-axis direction), while it does not much change in the vertical direction (Z-axis direction) (FIG. 5 (B)), caused by a corresponding positional change in the thus-opened vehicle door which blocks the radio waves in the LF band. Further, when an intrusion into the inside of the vehicle occurs as a result of a window glass being broken instead of the vehicle door being thus prized open, the distribution of the electric field provided by the radio waves inside of the vehicle much changes particularly in the vertical direction (Z-axis direction), cased by a hand of the intruder entering the inside of the vehicle (FIG. 5 (C)).

Therefore, in the embodiment, the detectors 14 detect electric field intensities X, Y and Z occurring in the respective axis directions with the use of the reception antennas of the respective axes. The ECU 10 first, immediately after the precaution setting is made, reads the electric field intensities X, Y and Z of the respective axes detected by the detectors 14 (Step 102), and stores, in a memory, the electric field intensities X, Y and Z at the time of the precaution setting, detected by the detectors 14, respectively, as criterion values (thresholds) X0, Y0 and Z0 for intrusion detection (Step 104).

After thus storing the thresholds X0, Y0 and Z0 for intrusion detection in the memory completely, the ECU 10 determines whether or not to continue the precaution setting mode (Step 106). Then, as long as the precaution setting mode is to be continued in the determination result (Yes in Step 106), the ECU 10 reads electric field intensities X1, Y1 and Z1 of the respective axes detected by the detectors 14 in response to output of radio waves in the LF band from the transmitters 12, from the detectors 14 at predetermined intervals (Step 108).

The ECU 10 determines whether or not the thus-read electric field intensities X1, Y1 and Z1 of the respective axes much change with respect to the thresholds X0, Y0 and Z0, stored in Step 104 or updated in Step 112 described below (|X1| > |X0±α|, |Y1| > |Y0±β|, |Z1| > |Z0±γ|; Step 110).
It is noted that α, β and γ mean minimum changes in electric field intensities which may occur from an intrusion, for electric field intensities of X-axis, Y-axis and Z-axis, respectively.

Then, when, as a result, it is determined that not much change has occurred in the electric field intensity of any axis (No in Step 110), the ECU 10 carries out processing of updating of the thresholds X0, Y0 and Z0 for intrusion detection, by the electric field intensities X1, Y1 and Z1 of the respective axes, read in Step 108 (Step 112). After that, the Step 106 is carried out repetitively.

On the other hand, when determining that a much change has occurred in the electric field intensity of at least one of the respective axes (Yes in Step 110), the ECU 10 determines that an intrusion into the inside of the vehicle from the outside has occurred in the precaution setting mode, and carries out processing of providing instructions to the alarm unit 16 to blow the buzzer and/or display on the display device (Step 114). After that, the current routine is finished.

In the above-mentioned processing, upon precaution setting in which the transmitters 12, disposed in the center in the vehicle width direction, transmit radio waves in the LF band to the inside of the vehicle, the detectors 14, disposed in the vehicle doors, can detect electric field intensities of the X-axis direction, the Y-axis direction and the Z-axis direction, respectively, and can receive the radio waves of the LF band from the transmitters 12. Then, when a much change occurs in the electric field intensity of any axis from among those of the respective axes detected by the detectors 14, from the time of the start of precaution setting, it is possible to determine that an intrusion into the inside of the vehicle from the outside has occurred, and can carry out alarming processing of the alarm unit 16. Thereby, it is possible to help the occupant to early find out the intrusion into the vehicle of an unauthorized person, and thus, to prevent it.

When no intrusion into the vehicle has occurred, the electric field intensities inside of the vehicle are maintained in a stable state approximately in those of the start of precaution setting. On the other hand, when an intrusion into the vehicle has occurred, the electric field intensities inside of the vehicle much change from those of the start of precaution setting. In this point, it is possible to determine that an intrusion into the vehicle has occurred, when a large change has occurred in the electric field intensity of any axis, detected by the detectors 14. Accordingly, in the configuration of the embodiment, it is possible to detect an intrusion into the vehicle, based on a change in the received electric field intensities of the detectors 14 inside of the vehicle.

The electric field intensities, detected by the detectors 14 for detecting an intrusion into the vehicle, are from radio waves in the LF band, transmitted from the transmitters 12, as mentioned above. Radio waves in the LF band spread in an approximately spherical manner from the antenna, as mentioned above, and attenuate as a distance increases. Further, the radio waves are relatively easily blocked by a metal body, and thus, they hardly leak to the outside of the metal body. Accordingly, in the intrusion detecting system in the embodiment, it is possible to effectively avoid leakage of radio waves in the LF band from the inside to the outside of the vehicle, which is surrounded by the metal body. Therefore, in the intrusion detecting system in the embodiment, it is possible to effectively avoid leakage of radio waves from the inside of the vehicle, and thus, it is possible to avoid erroneous detection of an intrusion into the vehicle. Thus, it is possible to avoid erroneous alarming operation of the alarm unit 16.

It is noted that, as mentioned above, radio waves in the LF band from the transmitters 12 are likely to go around behind a structure or a baggage inside of the vehicle, and thus, they are hardly blocked before reaching the detectors 14. Thus, there occurs no case where the radio waves do not reach the detectors 14, at all. Accordingly, by using radio waves in the LF band for detecting an intrusion into the vehicle as in the embodiment, it is possible to effectively avoid creation of a zone inside of the vehicle for which it is not possible detect an intrusion into the vehicle, different from other sorts of radio waves having high progressive property, and thus, it is possible to prevent failure in detection of an intrusion into the vehicle.

Further, in the embodiment, immediately after a start of precaution setting, the threshold of an electric field intensity of each axis, which is used as a criterion for detecting an intrusion into the vehicle, is one which has been detected by the detectors 14 at the start of precaution setting. As a result, in the embodiment, in comparison to a configuration in which such a threshold of an electric field intensity is previously determined to a fixed value, it is possible to carry out detection of an intrusion into the vehicle precisely according to a particular situation, even when individual specificity of the system itself, such as output of radio waves from the transmitters 12, exists, a difference in an environment inside of the vehicle occurs due to a situation that a baggage or such is placed, or so, for example.

Further, in the embodiment, the threshold in an electric field intensity for each axis used as a criterion for detecting an intrusion into the vehicle is updated by one detected after that (in Step 112 of FIG. 6), during setting after the precaution setting is made, when electric field intensities detected by the detectors 14 have not much changed by more than a predetermined amount from previous values, for which ones obtained at the start of precaution setting are used as initial values. In this point, the thresholds are thus not limited to ones of the start of precaution setting, and, are changed according to a vehicle environment. Accordingly, in the embodiment, even when a distribution of an electric field inside of the vehicle changes, little by little, due to a variation in a temperature or such after the precaution setting, it is possible to, at all times, correct the thresholds for the electric field intensities for detecting an intrusion into the vehicle, to proper values. Thus, it is possible to carry out detection of an intrusion into the vehicle precisely.

In the above-mentioned embodiment, the upholstery foam linings of the vehicle doors correspond to an 'interior finishing material'; and, an 'intrusion detecting part' is achieved as a result of the processing of Step 110 in the routine shown in FIG. 6 being carried out by the ECU 10.

In the above-mentioned embodiment, the detectors 14 detect electric field intensities of the three axes (X, Y, Z), to receive radio waves in the LF band from the transmitters 12, and, a determination is made that an intrusion into the vehicle has occurred, when the electric field intensity of any single axis much changes. However, it is also possible to pay attention in particular to any axis from among the three axes, and to determine that an intrusion into the vehicle has occurred, when the electric field intensity of the axis much changes.

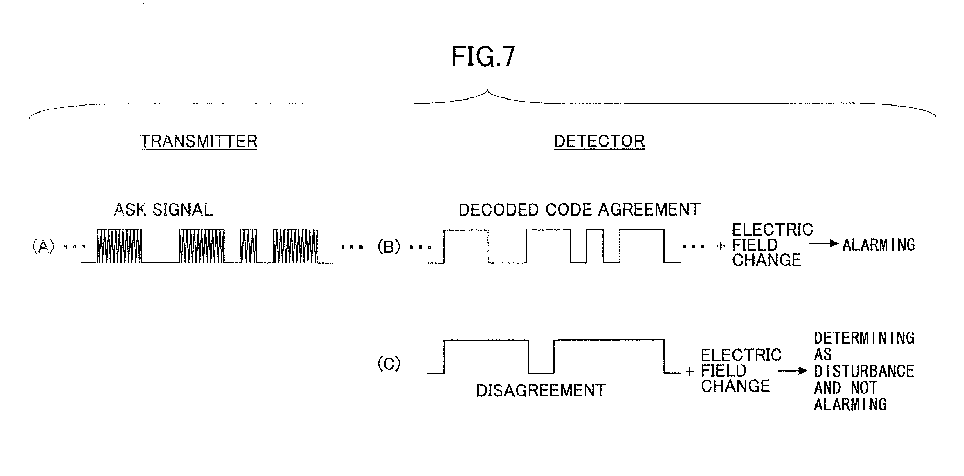

Further, in the above-mentioned embodiment, the transmitters 12 transmit radio waves in the LF band for detecting an intrusion into the vehicle. At this time, the signal in the LF band to transmit may be coded. When the signal in the LF band to transmit is thus coded, the detectors 14 decode the received signals. For example, as shown in FIG. 7 (A), the signals to transmit from the transmitters 12 are coded before being transmitted. Then, when a decoded code obtained from decoding of the received signal in an ASK method by the detectors 14 agrees with a predetermined one as shown in FIG. 7 (B), it is determined that an intrusion into the vehicle has occurred when a received electric field intensity of any axis changes much, and alarming processing of the alarm unit 16 is carried out. On the other hand, when the decoded code obtained from decoding of the received signal in the ASK method by the detectors 14 does not agree with the predetermined one as shown in FIG. 7 (C), it is determined that no intrusion into the vehicle has occurred but merely a disturbance has occurred, even when the received electric field intensity of any axis changes much, and alarming processing of the alarm unit 16 is not carried out.

In such a configuration that coding and decoding of the signal are carried out by the transmitters 12 and the detectors 14 as in this variant embodiment, agreement of the decoded coded is not obtained when the received electric field intensity changes much due to distribution noise as if an intrusion into the vehicle actually occurs. Thus, it is possible to avoid erroneous detection that an intrusion into the vehicle has occurred, and it is possible to prevent erroneous alarming operation of the alarm unit 16. It is noted that, in the ASK method, it is possible to achieve coding and decoding in the transmitters 12 and the detectors 14 with a simple configuration, and thus, it is possible to simplify the system configuration.

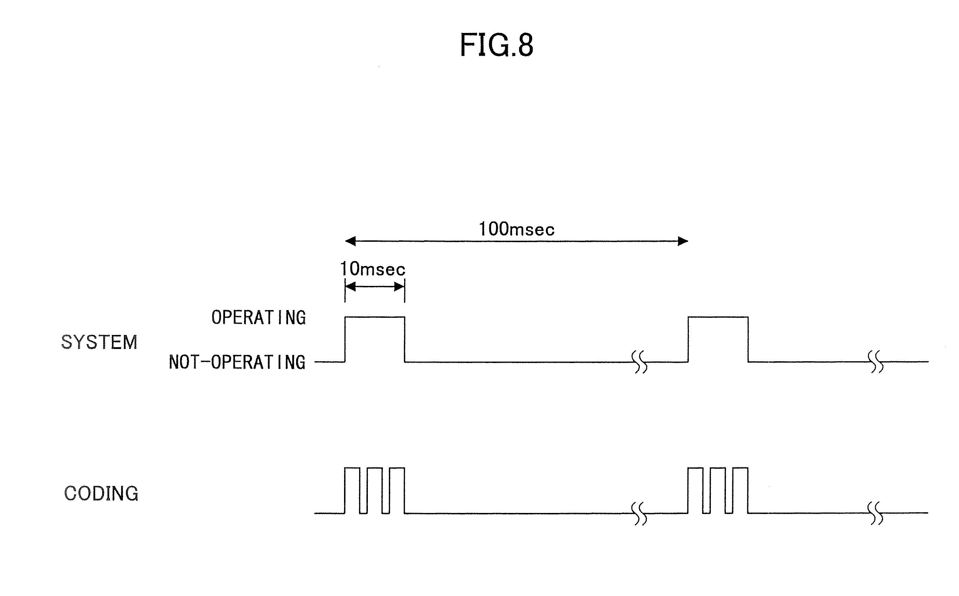

Further, in the above-mentioned embodiment, after a start of precaution setting, the transmitters 12 transmit radio waves in the LF band and the detectors 14 receive the radio waves, for detecting an intrusion into the vehicle. However, operation of the system or output of radio waves from the transmitters 12 may not have to be carried out at all times, but may be carried out intermittently. For example, as shown in FIG. 8, the system may operate for 10 milliseconds every 100 milliseconds. In the remaining 90 milliseconds, operation of the system is interrupted. In this case, coding of radio waves in the LF band and transmission and output thereof by the transmitters 12 are carried out only during the operation of the system. In this configuration, in comparison to a configuration in which operation of the system and transmission of radio waves are carried out at all times, it is possible to reduce power consumption required for operation of the system and transmission of radio waves, and it is possible to obtain power saving effect in detecting an intrusion into the vehicle during stoppage of the vehicle.

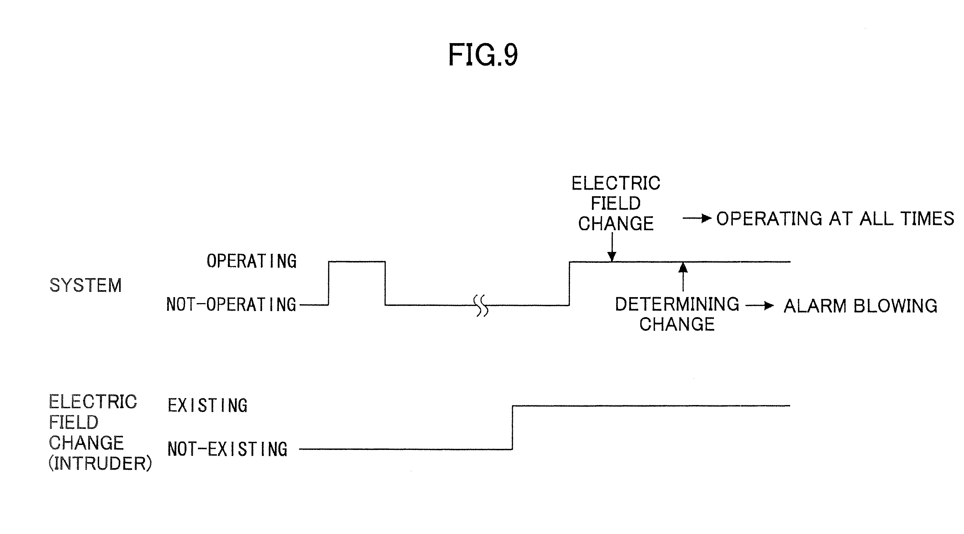

Further, in the above-mentioned system in which operation of the system or transmission and output of radio waves from the transmitters 12 are carried out intermittently, such a configuration may be made in which, a determination that an intrusion into the vehicle is not made immediately when a change in electric field intensities detected by the detectors 14 becomes relatively large, but, as shown in FIG. 9, at this time, a mode is switched from a mode that operation of the system or transmission and output of radio waves from the transmitters 12 are carried out intermittently to a mode that they are carried out at all time. Then, a determination that an intrusion into the vehicle has occurred is made when, after the switching, such a state continues that a change in electric field intensities from immediately before the switching is relatively large is maintained for a predetermined time. In this configuration, it is possible to determine that an intrusion into the vehicle has occurred when a state in which a change in received electric field intensities is relatively large continues for a long time, and thus, it is possible to prevent such a determination from being made when disturbance noise has occurred, and thus, it is possible to make the determining more precisely.

Further, in the above-mentioned embodiment, radio waves are transmitted by the transmitters 12 for detecting an intrusion into the vehicle. As the transmitters 12, a second transmitter provided in a vehicle cabin, which is included in a remote control system controlling an in-vehicle apparatus (such as that for starting up an engine) by carrying out collation in communications between a potable apparatus, which an occupant inside of the vehicle has, and the in-vehicle apparatus, may be utilized. That is, the second transmitter provided in the vehicle cabin may be used as one for this original use, and also, may be used as the transmitters 12 of the intrusion detecting system. In more detail, the second transmitter provided in the vehicle cabin of the remote control system transmits a request signal for requiring a response from the portable apparatus when the occupant exists inside of the vehicle, while, when, after the occupant exits from the vehicle and the precaution setting is made, the second transmitter provided in the vehicle cabin may act as the transmitters 12, and thus, may transmit radio waves for detecting an intrusion into the vehicle. In this configuration, it is possible to share the component in the entire in-vehicle system, and thus, it is possible to reduce component costs and simplify the configuration. In this case, the second transmitter provided in the vehicle cabin corresponds to an 'in-vehicle transmitter'.

Further, in the above-mentioned embodiment, radio waves in the LF band are transmitted by the transmitters 12 to the inside of the vehicle for detecting an intrusion into the vehicle. The transmission of radio waves from the transmitters 12 may be controlled with the use of radio wave in an LF band transmitted by a third transmitter provided outside of the vehicle cabin, which third transmitter provided outside of the vehicle cabin is of a remote control system which controls an in-vehicle apparatus (for example, one for controlling locking/unlocking of the vehicle doors) by carrying out collation in communications between a portable apparatus which an occupant has, who is entering the vehicle, and the in-vehicle apparatus.

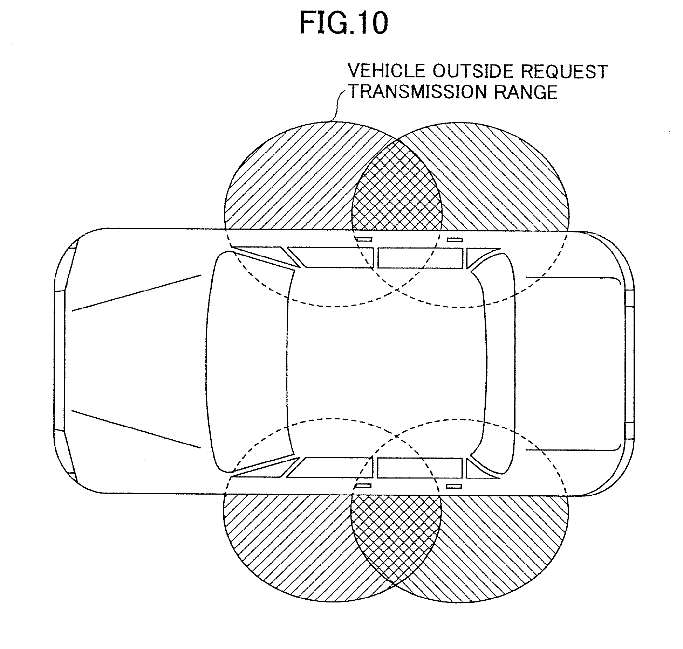

Specifically, the third transmitter provided outside of the vehicle cabin of the remote control system is built into in a door handle part of each vehicle door, as shown in FIG. 10. From the door handle parts, to predetermined ranges (for example, within 1 meter), radio waves in an LF band are transmitted at predetermined intervals (for example, every 200 milliseconds), for requesting the portable apparatus of a response. A second detector for the outside of the vehicle for detecting and receiving an electric field intensity of the radio waves in the LF band is provided in the vehicle door, the vehicle body or such. Then, such a control is made that, when an electric field intensity received by an antenna of the second detector for the outside of the vehicle changes by more than a predetermined amount from a stable state, it is determined that a dubious character may approach the vehicle, and transmission of radio waves from the transmitters 12 inside the vehicle is carried out at all times or at intervals which are shortened relatively. On one hand, when the electric field intensity received by the antenna of the second detector for the outside of the vehicle does not change by more than the predetermined amount from the stable state, it is determined that there is not a possibility that a dubious character approaches the vehicle, and the transmission of radio waves from the transmitters 12 inside the vehicle is stopped or at intervals which are elongated relatively. In this configuration, it is possible to save power consumption required for transmission of radio waves from the transmitters 12 for detecting an intrusion into the vehicle, and thus, it is possible to obtain power saving effect in detecting an intrusion into the vehicle during a stoppage of the vehicle.

It is noted that, in this case, the third transmitters for the outside of the vehicle correspond to an 'in-vehicle communication apparatus', and the second detector for the outside of the vehicle corresponds to a 'approach detecting part' or an 'electric field intensity detecting part'. Further, a 'transmission mode switching part' is achieved as a result of transmission of radio waves from the transmitters 12 being controlled by the ECU 10.

Further, in the above-mentioned embodiment, as the threshold of electric field intensity used for detecting an intrusion into the vehicle, an electric field intensity detected by the detectors 14 immediately after a start of precaution setting is set as an initial value, and after that, each time when the detectors 14 detect electric field intensities, the detected electric field intensities are used to update the threshold when a change by more than the predetermined amount does not occur. However, instead, the electric field intensities detected by the detectors 14 immediately after the start of precaution setting may be used as the threshold contginously.

Further, in the above-mentioned embodiment, the intrusion detecting system is applied to the vehicle. However, the present invention is not limited thereto, and may be applied to home security or such.

Further, the present invention is not limited to the above-described embodiments, and variations and modifications may be made without departing from the basic concept of the present invention claimed below.

The present application is based on Japanese priority application No. 2006-284519, on October 19, 2006, the entire contents of which are hereby incorporated herein by reference.

## Claims

1. An intrusion detecting system (9) comprising:
a transmitter (12) transmitting radio waves in an LF band;
a detector (14) detecting an electric field intensity in at least one axis and receiving the radio waves from the transmitter; and
an intrusion detecting means (10) for detecting an intrusion within a predetermined range based on a comparison result between a predetermined threshold and a value detected by the detector for electric field intensities of any axis.

2. The intrusion defecting system as claimed in claim 1, wherein:
said detector (14) is configured to detect electric field intensities of an X-axis, a Y-axis and a Z-axis, respectively.

3. The intrusion detecting system as claimed in claim 2, wherein:
said intrusion detecting means (10) is configured to detect an intrusion when an electric field intensity of a predetermined one of the X-axis, Y-axis and Z-axis changes much.

4. The intrusion detecting system as claimed in any one of claims 1 to 3, wherein:
said threshold is an electric field intensity which is detected by the detector immediately after a start of precaution setting to detect an intrusion by means of the intrusion detecting means; and
the intrusion detecting means (10) detects an intrusion in the predetermined range based on the comparison result, after the electric field intensity detected by the detector of each axis has been stored as the threshold immediately after the start of precaution setting.

5. The intrusion detecting system as claim in claim 4, wherein:
after the precaution setting, during continuation of the setting, when an electric field intensity detected by the detector (14) does not change by a predetermined amount from a current threshold, the threshold is updated by the currently detected electric field intensity.

6. The intrusion detecting system as claimed in any one of claims 1 to 5, mounted in a vehicle (11), wherein:
said transmitter (12) is provided near a center in a vehicle width direction inside the vehicle; and
said detector (14) is provided inside of an interior finishing material inside of the vehicle.

7. The intrusion detecting system as claimed in claim 6, wherein:
the transmitters are provided in a front seat and a rear seat of the vehicle (11); and
the detectors (14) are provided in vehicle doors.

8. The intrusion detecting system as claimed in any one of claims 1 to 7, wherein:
said transmitter (12) transmits the radio waves in the LF band after coding;
said detector (14) decodes the received radio waves; and
said intrusion detecting means (10) detects an instruction in the predetermined range based on the comparison result in a case where a code obtained from decoding made by the detector agrees with a predetermined code.

9. The intrusion detecting system as claimed in claim 8, wherein:
a method of coding of the radio waves made by the transmitter (12) is an ASK method.

10. The intrusion detecting system as claimed in any one of claims 1 to 9, wherein:
an in-vehicle transmitter, which is of a remote control system used for controlling an in-vehicle apparatus, is also used as said transmitter (12) in a shared manner, based on a collation result in communication with a portable apparatus which an occupant carries.

11. The intrusion detecting system as claimed in any one of claims 1 to 10, mounted in a vehicle, comprising:
approach detecting means (10) for detecting approach of a body to the vehicle (11); and
transmission mode switching means for switching a mode for transmitting the radio waves in the LF band by the transmitter, between a regular mode and a power saving mode, based on a detection result of the approach detecting means.

12. The intrusion detecting system as claimed in claim 11, wherein:
said approach detecting part has an electric field intensity detecting means for detecting an electric field intensity of radio waves of a request signal, which is used for requesting a potable apparatus to transmit a predetermined signal, which request signal is transmitted by an in-vehicle communication apparatus of a remote control system, which remote control system is provided for controlling an in-vehicle apparatus based on a collation result in communication with the portable apparatus which an occupant who is getting in the vehicle (11) from the outside carries; and detects the body approaching the vehicle (11) from the outside.

13. The intrusion detecting system as claimed in claim 11, wherein:
when an electric field intensity received by an antenna of the approach detecting means changes by more than a predetermined amount from a stable state, it is determined that a dubious character may approach the vehicle (11), and transmission of radio waves from the transmitters is carried out at all times or at intervals which are shortened relatively, while, when the electric field intensity received by the antenna of the approach detecting means does not change by more than the predetermined amount from the stable state, it is determined that there is not a possibility that a dubious character approaches the vehicle, and the transmission of radio waves from the transmitter is stopped or at intervals which are elongated relatively.
